# EUROPEAN PATENT SPECIFICATION

(11) **EP 1 684 272 B1**
(45) Date of publication and mention of the grant of the patent: **08.10.2008**
(21) Application number: 06300001.2
(22) Date of filing: 02.01.2006
(51) Int. Cl.: G11B 7/08, G11B 7/22, G02B 7/02

(54) **Optical scanning device for an appliance for reading and/or writing to optical recording media**
Optisches Abtastgerät für eine Vorrichtung zum Lesen und/oder Schreiben auf optischen Aufzeichnungsmedien
Dispositif de balayage optique pour un appareil destiné à lire un support d'enregistrement optique ou à écrire sur ce dernier

(30) Priority: 21.01.2005 EP 05001185
(43) Date of publication of application: 26.07.2006
(73) Proprietor: Thomson Licensing, 92100 Boulogne-Billancourt (FR)
(72) Inventor: Suzuki, Tsuneo, 78087 Mönchweiler (DE); Tabor, Günter, 78056 Villingen-Schwenningen (DE); Dupper, Rolf, 78050 Villingen-Schwenningen (DE)
(74) Representative: Thies, Stephan

(56) References cited:
- US-A- 5 488 594
- US-B1- 6 222 687

## Description

The invention relates to an optical scanning device for an appliance for reading and/or writing to optical recording media, in which the scanning device reads or stores information or data in one or more tracks on a recording medium. In this case, the recording medium may be a compact disc, known as a CD, a digital versatile disc, known as a DVD, a CD-ROM or DVD-ROM or a rewritable CD or DVD or else another recording medium.

Appliances for recording or reproducing information or data in one or more tracks on a recording medium which are provided with a scanning device, also called a "pick-up", for reading and/or recording the information are known. Normally, the respective scanning device has an optical housing, which can be moved obliquely or at right angles to the respective recording track on the recording medium in the manner of a carriage and which can move at high speed and with a high level of positioning accuracy when driven by an electric motor, combined with a short access time to different locations on the recording medium, and has an optical scanning unit, also called actuator, which emits a laser beam onto the recording medium and receives the beam reflected therefrom. The scanning unit, which has a focusing lens, has a baseplate mounted so that it is adjustable on the housing, which can be moved on guide rods, in order to be able to orient the focusing lens according to the optical path. This is necessary because the scanning unit has a series of optical components for directing and orienting the laser beam on the path to the respective recording medium and from the latter to a detector which, like the mechanical parts which retain and connect them, have specific production and assembly tolerances.

So that the respective recording medium can be illuminated at the correct position and its data can be transmitted to an optical detector precisely, provision is made for the focusing lens to be aligned during assembly of the scanning device by tilting the scanning unit, as described in DE 694 15 762 T2 and DE 698 01 021 T2, for example.

In the known scanning devices, the scanning unit with the focusing lens is tilted by means of the baseplate (support), which has at least one slide face resting on at least one support face integrally formed on the optical housing, the faces being in spherical or cylindrical form, in particular. To this end, said documents disclose the practice of tilting the scanning unit together with the baseplate using a spring means and at least one adjusting screw, which are supported on the housing, the spring means being arranged on the side of the (virtual) tilt axis and of the scanning unit which is remote from the at least one adjusting screw, in order to change the position of the focusing lens in this way.

In this case, the at least one adjusting screw is arranged at an opening in the housing so as to be displaceable transversely with respect to the screw axis, has a screw head bearing against the edge of the opening on the side of the housing which is remote from the baseplate, and its threaded shaft engages without play into a threaded hole with a plurality of threads which is made in the baseplate. When the at least one adjusting screw is turned, the baseplate with the threaded hole is tilted about a virtual axis, the spring force having a more or less pronounced action depending on the direction of tilt, and friction arising between the screw head and the housing which inhibits the sliding movement from the screw head on the housing and prevents smooth rotation of the adjusting screw. The alternation between adhesive and sliding friction on the screw head results in bucking ("stick-slip effect"), which makes precise adjustment more difficult. The invention is intended to provide a remedy for this.

A problem to be solved by the invention is to improve the mounting arrangement for the scanning unit on an optical housing in an optical scanning device for an appliance for reading and/or writing to optical recording media in accordance with the preamble of claim 1.

This problem is solved for a scanning device in accordance with the preamble of claim 1 by the characterizing features of said claim. Advantageous refinements are presented in the dependent claims.

Accordingly, the essence of the invention is that in an optical scanning apparatus for an appliance for reading and/or writing to optical recording media, having a moveably arranged optical housing with slide faces for applying a support for an adjustable scanning head, where the support is mounted on and tensioned against the slide faces by means of at least one adjusting screw supported on the housing and by means of at least one spring means and can have the scanning head adjusted about a virtual axis when there is a screw movement from the adjusting screw, the adjusting screw acts on the support at a variable angle and changes its angle with respect to said support in the event of a screw movement to prompt an adjusting movement from said support. In known fashion, mating slide faces are arranged on the support. In similarly known fashion, the adjusting screw at an interval from the mating slide faces and the spring means likewise act on the support on the side which is remote from the adjusting screw. In this case, the screw head of the adjusting screw bears against that edge of an opening made in the housing which is situated transversely with respect to its axis, penetrates said opening with its threaded shaft with play in the direction of the support, and can move in the opening transversely with respect to its axis. This adjusting screw arrangement advantageously results in simpler adjustment of the support with the scanning head, since said adjustment takes place gently and smoothly. This in turn is associated with shorter process and adjustment times.

When there is a screw movement from the adjusting screw, the support with the scanning head is moved on the slide faces, which are preferably in spherical or cylinder-segment form, and is tilted about a virtual axis. In this case, the angle of inclination of the support changes with respect to the optical housing. As a result of the adjusting screw being arranged on the support at a variable angle, the screw head at the edge of the opening is no longer moved on the optical housing, but rather is just tilted about a line or a point, in each case depending on the design of the screw head, which results in a gentle and smooth adjusting movement.

The variability of the angle of the adjusting screw acting on the support is easily achieved by virtue of a threaded hole with just one supporting thread being made in said support for the adjusting screw. When said adjusting screw engages in this thread to produce a connection, the adjusting screw is supported on it in the manner of an articulation, the strength of the connection to this one thread being approximately 60% of the strength of a threaded element with a plurality of threads. In this case, the one thread may also still be interrupted and may just comprise two thread segments arranged opposite, with the connecting line between these thread segments running essentially parallel to the virtual axis of the support and simultaneously being the axis of inclination for the adjusting screw.

To increase the interval between the screw head and the axis of inclination of the adjusting screw on the support, the thread or the thread segments is/are made in the threaded hole on the side which is remote from the housing. This keeps down the size of the adjusting screw's angle of inclination which is made possible, and linked to this also the diameter of the opening for the screw, which in turn means that the screw head may advantageously end up being smaller.

To improve the fine adjustment, the adjusting screw should be at as great as possible an interval from the virtual axis. This greater interval is achieved by providing the support with a tongue which points away from it and on which the threaded hole is made. In known fashion, the optical housing is advantageously at a lower level in the region of the tongue, in order to increase the maximum adjustment angle of the support relative to the optical housing.

The support extends parallel to the virtual axis between bearing brackets which are formed on the housing and whose free ends have the slide faces on them. In this case, the bearing brackets are simultaneously used as guide means for the support when there is an adjusting movement about the virtual axis.

The arrangement and/or design of the slide faces on the housing is preferably concave relative to the support, so that the latter's mating slide faces which correspond to these slide faces are held in the manner of a tub. In this case, the slide faces may have a spherical or cylindrical shape, in particular. Advantageously, these and the mating slide faces, which bear against them using the matching shapes, are in cylindrical form, however, in order to permit an adjusting movement from the support in just one stipulated direction. As an alternative to the cylindrical design of the slide faces on the housing, a planar prismatic design is also possible, with the cylindrical mating slide faces bearing linearly against these in a manner parallel to the virtual axis.

The spring means is a pretensioned tension spring which simply needs to be arranged between the support and the housing and which acts on a tongue integrally formed on the support. This tongue and hence the tension spring are advantageously arranged on the support diagonally with respect to the adjusting screw on the other side, because as a result the guidance of said support between the bearing brackets prevents twisting during an adjusting movement and the arrangement requires just one adjusting screw.

The invention is explained below with reference to an exemplary embodiment. In the associated drawings:
- figure 1: shows an optical scanning device in a perspective illustration,
- figure 2: shows the optical housing of the scanning device with the support for the scanning head in a perspective illustration,
- figure 3: shows the housing from figure 2 in a further perspective illustration,
- figures 4a: to c: show a respective section Z - Z through a known scanning apparatus with various settings for the support on the optical housing and with an adjusting screw,
- figure 5a and b:: show the position of the adjusting screw in the settings shown in figures 4b and c, in enlarged form,
- figures 6a to c:: show a respective section Z - Z through an inventive scanning apparatus with various settings for the support on the optical housing and also with an adjusting screw, and
- figures 7a and b:: show the position of the adjusting screw in the settings shown in figures 6b and c, in enlarged form, and
- figure 8: shows an interrupted thread having two thread segments.

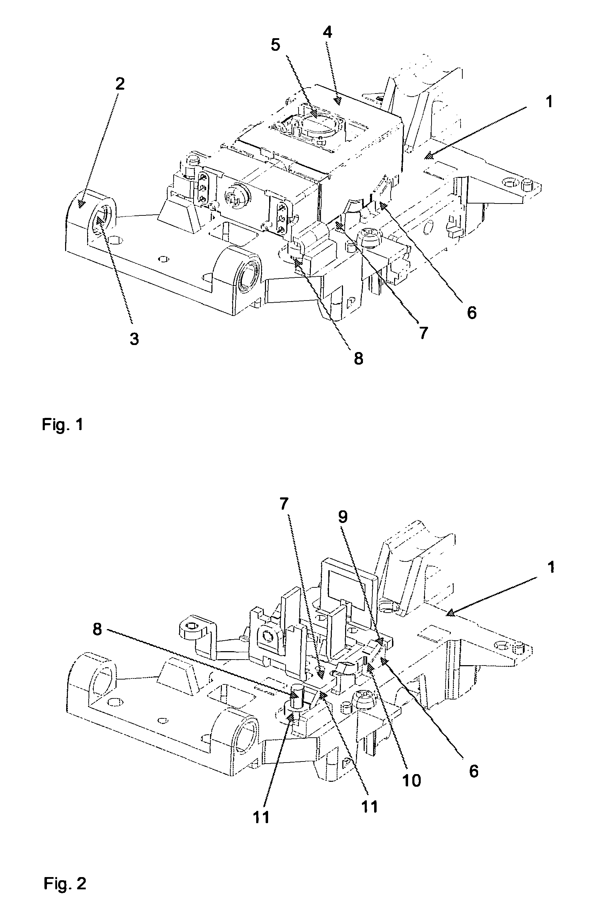

Figure 1 shows an optical scanning device with an optical housing 1 made of diecast zinc or plastic having guide lugs 2 for linear movement in which holes 3 are made for arrangement on a guide rod (not shown) and having a scanning head 4 with a focusing lens 5. The scanning head 4 is firmly connected to a support 7 (figure 2) which it covers and which is mounted on the housing 1 so as to be able to be adjusted on bearing brackets 6. To adjust the support 7, there is an adjusting screw 8 which is supported on the housing 1 and which acts on the support 7 at an interval from the bearing brackets 6.

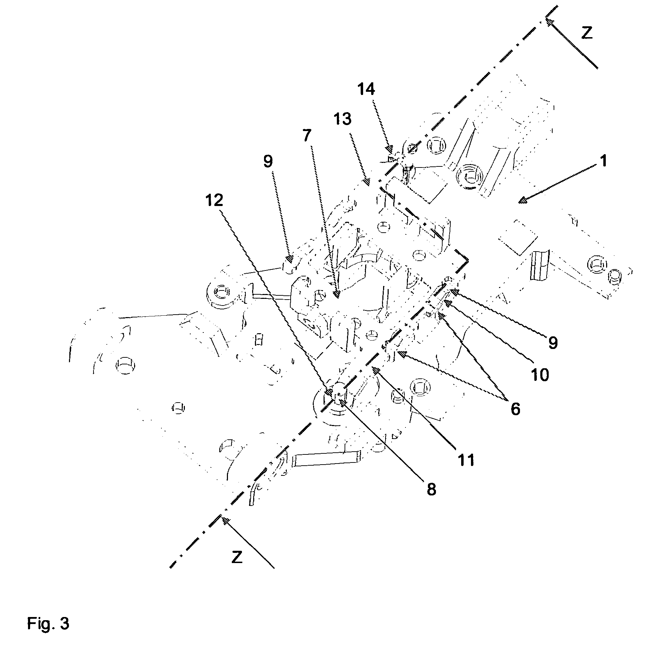

Figures 2 and 3 show the mounting of the support 7 on the housing 1. The bearing brackets 6 integrally formed on the latter are provided, on their top sides, with concavely curved cylindrical slide faces 9 for holding the support 7, which to this end has mating slide faces 10 which correspond to the slide faces 9 and which bear against the slide faces 9 in convexly curved, cylindrical form and using the matching shapes. Figure 3, in particular, shows that the adjusting screw 8 is in engagement with a threaded hole 12 on a tongue 11 integrally formed on the support 7, and that the housing 1 is at a lower level in the region of the tongue 11 and, as a result, extends the space for the tongue 11 to move. On the side of the support 7 which is remote from the adjusting screw 8, a further tongue 13 is formed diagonally with respect thereto and has a tension spring 14 acting on it at an interval from the slide faces 9, said tension spring also being mounted on the housing 1 and pushing the support 7 against the slide faces 9 under pretensioning. Those lateral faces of the bearing brackets 6 which protrude on the housing 1 and which face the support 7 also act as guide faces for the support 7 and prevent the latter from twisting.

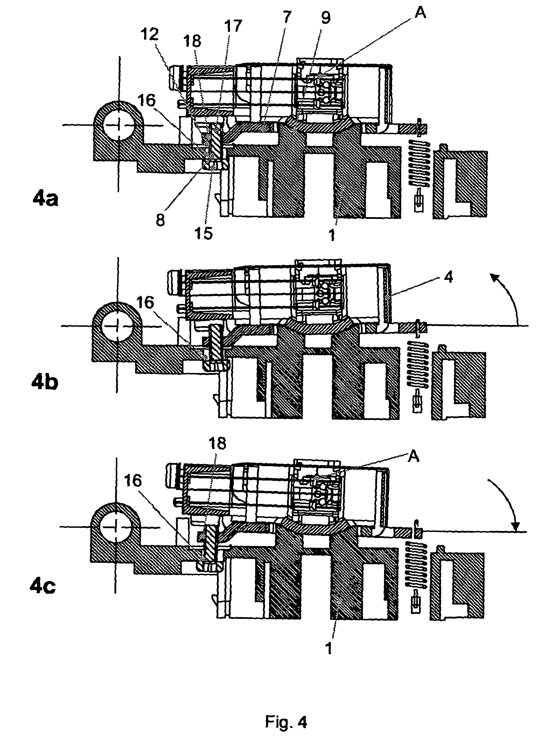

Figures 4a to c show a respective section Z - Z through a known scanning apparatus with various settings for the support on the optical housing and also with an adjusting screw 8. The figure shows the mounting of the support 7 and the arrangement of the adjusting screw 8. The screw head 15 of the latter bears against the lower edge of an opening 16, and its threaded shaft 17 penetrates said opening, the diameter of the opening being greater than the diameter of the threaded shaft, such that the screw head 15 covers the edge of the opening 16 on all sides even when it moves within the scope of the given play. In this case, the threaded hole 12 has a thread 18 over its entire length. On account of this thread which comprises a plurality of windings, the adjusting screw 8, whose screw head 15 bears against the housing 1 under pretensioning, is connected rigidly to the support 7.

To correct the position of the focusing lens, the support 7 with the scanning head 4 is rotated about a virtual axis A so as to slide on the slide faces 9, which changes its angle relative to the housing 1. This correction is made by turning the adjusting screw 8. Depending on the direction of correction, the adjusting screw 8 is rotated either clockwise or anticlockwise. In the first case the support 7 is rotated anticlockwise about the virtual axis A and arrives at a position as shown in figure 4b, for example, and in the second case the support is rotated clockwise and arrives at a position as shown in figure 4c, for example. The respective movement of the adjusting screw 8 which is enforced by these movements results in the screw head 15 sliding with friction relative to the housing 1, i.e. executing a sliding movement transversely with respect to the screw axis.

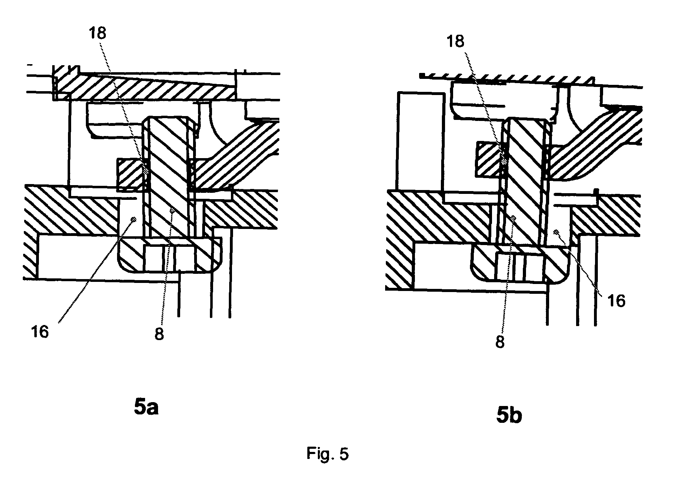

Figures 5a and 5b show the two screw positions shown in figures 4b and 4c in an enlarged detail.

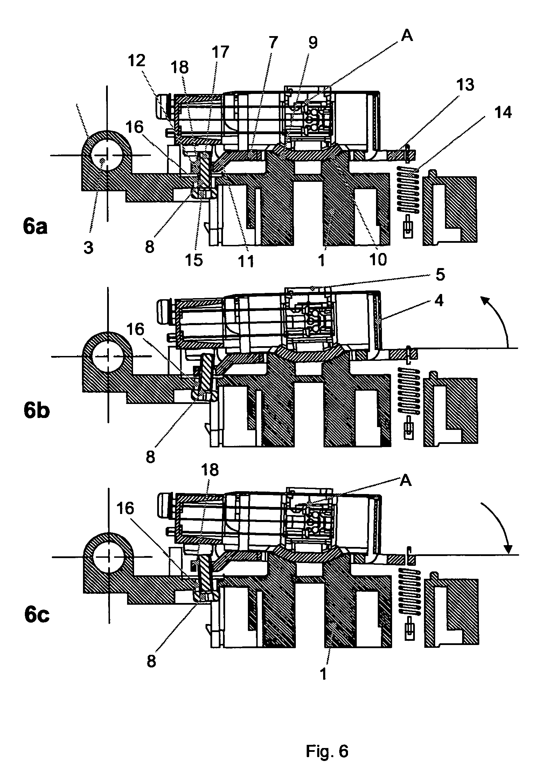

Figures 6a to 6c show the mounting of the support 7 and the arrangement of the adjusting screw 8 for a scanning apparatus based on the invention. In this case, just one supporting thread turn 18 is made in the threaded hole 12 and, in this context, is arranged on the scanning head side, that is to say on the side which is remote from the housing 1, in the threaded hole and hence on the tongue 11. This thread design with just one thread turn 18 allows the adjusting screw 8, whose screw head 15 bears against the housing 1 under pretensioning, to make a tilting movement on the thread turn 18 without the screw head 15 sliding with friction on the housing 1. Instead of such a sliding movement, the screw head 15 is merely twisted.

In this case too, the position of the focusing lens is corrected by turning the adjusting screw 8. The movements of the adjusting screw 8 which are enforced in each case are made possible without friction and smoothly as a result of its variation of angle in the threaded hole 12, as described above.

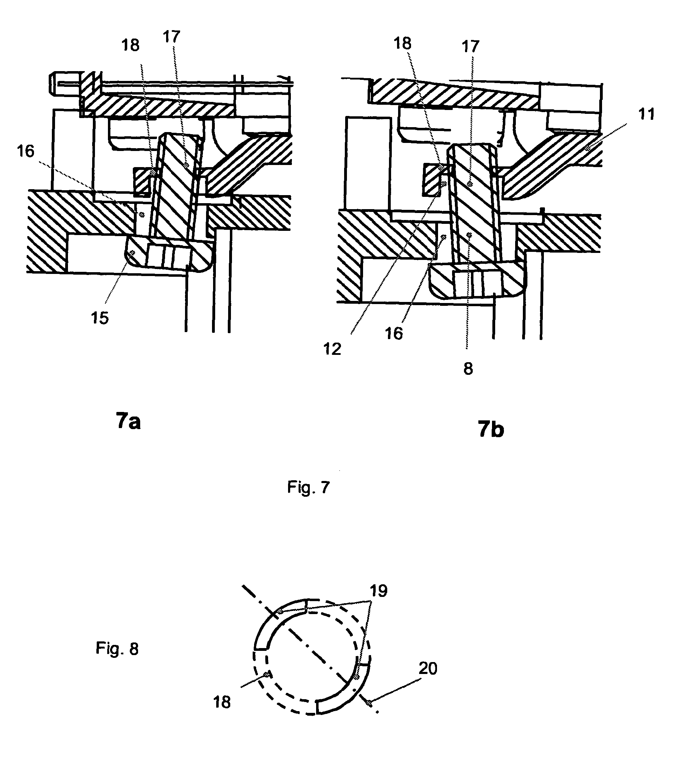

Figures 7a and b show the two screw positions shown in figures 6b and 6c in an enlarged detail.

Figure 8 shows the advantageous embodiment in which the thread turn 18 is interrupted and comprises merely two thread segments 19 arranged opposite. In this case, the thread segments 19 are advantageously arranged such that their connecting line 20, which acts as an axis of inclination for the adjusting screw, runs essentially parallel to the virtual axis A of the support 7.

## Claims

1. Optical scanning device for an appliance for reading or for writing to or for reading and writing to optical recording media, having a movably arranged optical housing (1) with integrally formed slide faces (9) for holding a support (7) which is provided with mating slide faces (10), can be adjusted about a virtual axis (A) and has a scanning head (4), having at least one adjusting screw (8) which is supported on the housing (1), acts on the support (7), bears against the edge of an opening (16) made in the housing (1), penetrates said opening with its threaded shaft (17) in the direction of the support (7) with play and can move in the opening (16) in a transverse direction, and having at least one spring means (14) which acts on the support (7) on the side of the slide faces (9) which is remote from the adjusting screw (8) and tensions said support against the slide faces (9) of the housing, **characterized in that** the adjusting screw (8) acts on the support (7) at a variable angle and changes its angle with respect to the support (7) in the event of a screw movement to prompt an adjusting movement from the support (7).

2. Scanning device according to claim 1, **characterized in that** a threaded hole (12) with just one supporting thread turn (18) for the adjusting screw (8) is made on the support (7).

3. Scanning device according to claim 2, **characterized in that** the thread turn (18) is interrupted and has just two thread segments (19) arranged opposite one another, and **in that** the connecting line (20) between the thread segments (19) runs essentially parallel to the virtual axis (A) of the support (7).

4. Scanning device according to claim 2 or 3, **characterized in that** the thread turn (18) or the thread segments (19) is/are made on the support (7) on the side which is remote from the housing (1).

5. Scanning device according to one or more of claims 2 to 4, **characterized in that** the hole (12) provided with the thread turn (18) is arranged on the tongue (11) formed on the support (7).

6. Scanning device according to claim 5 **characterized in that** the housing (1) is at a lower level in the region of the tongue (11).

7. Scanning device according to claim 1, **characterized in that** the slide faces (9) arranged on the housing (1) are formed on bearing brackets (6) which simultaneously form lateral guide faces for the support (7) on their side facing the support (7).

8. Scanning device according to claim 1, **characterized in that** the mating slide faces (10) formed on the support (7) correspond in shape to those (9) on the housing (1) and bear against them using their matching shapes.

9. Scanning device according to claim 1, **characterized in that** the spring means is a tension spring (14) which is arranged and pretensioned between the housing (1) and the support (7) and which acts on a tongue (13) integrally formed on the support (7).

10. Appliance for reading or for writing to or for reading and writing to optical recording media which comprises a scanning device according to one or more of claims 1 to 9.

## Patentansprüche

1. Optisches Abtastgerät für eine Vorrichtung zum Lesen oder Schreiben auf oder zum Lesen und Schreiben auf optische Aufzeichnungsmedien mit einem beweglich angeordneten optischen Gehäuse (1) mit integral ausgebildeten Gleitlagerflächen (9) zum Halten eines Trägers (7), der mit entsprechenden Gleitlagerflächen (10) ausgestattet ist, um eine virtuelle Achse (A) justiert werden kann und einen Abtastkopf (4) aufweist mit mindestens einer Justierschraube (8), die auf dem Gehäuse (1) gestützt wird, auf den Träger (7) wirkt, an dem Rand einer in dem Gehäuse (1) ausgebildeten Öffnung (16) anliegt, die Öffnung mit ihrem Gewindeschaft (17) in der Richtung des Trägers (7) mit Spiel durchdringt und sich in der Öffnung (16) in einer Querrichtung bewegen kann, und mit mindestens einem Federmittel (14), das auf den Träger (7) auf der Seite der Gleitlagerflächen (9) einwirkt, das von der Justierschraube (8) entfernt ist und den Träger gegen die Gleitlagerflächen (9) des Gehäuses spannt, **dadurch gekennzeichnet, daß** die Justierschraube (8) unter einem variablen Winkel auf den Träger (7) wirkt und ihren Winkel bezüglich des Trägers (7) im Fall einer Schraubenbewegung ändert, um eine Justierbewegung von dem Träger (7) zu veranlassen.

2. Abtastgerät nach Anspruch 1, **dadurch gekennzeichnet, daß** ein Gewindeloch (12) mit lediglich einer Gewindeumdrehung (18) für die Justierschraube (8) auf dem Träger (7) hergestellt ist.

3. Abtastgerät nach Anspruch 2, **dadurch gekennzeichnet, daß** die Gewindeumdrehung (18) unterbrochen ist und nur zwei einander gegenüber angeordnete Gewindesegmente (19) aufweist und daß die Verbindungslinie (20) zwischen den Gewindesegmenten (19) im wesentlichen parallel zu der virtuellen Achse (A) des Trägers (7) verläuft.

4. Abtastgerät nach Anspruch 2 oder 3, **dadurch gekennzeichnet, daß** die Gewindeumdrehung (18) oder die Gewindesegmente (19) auf dem Träger (7) auf der Seite hergestellt ist/sind, die von dem Gehäuse (1) entfernt ist.

5. Abtastgerät nach einem oder mehreren der Ansprüche 2 bis 4, **dadurch gekennzeichnet, daß** das mit der Gewindeumdrehung (18) versehene Loch (12) an der auf dem Träger (7) ausgebildeten Zunge (11) ausgebildet ist.

6. Abtastgerät nach Anspruch 5, **dadurch gekennzeichnet, daß** das Gehäuse (1) auf einer niedrigeren Höhe in dem Gebiet der Zunge (11) ist.

7. Abtastgerät nach Anspruch 1, **dadurch gekennzeichnet, daß** die an dem Gehäuse (1) angeordneten Gleitlagerflächen (9) an Lagerhalterungen (6) ausgebildet sind, die gleichzeitig seitliche Führungsflächen für den Träger (7) auf ihrer dem Träger (7) zugewandten Seite bilden.

8. Abtastgerät nach Anspruch 1, **dadurch gekennzeichnet, daß** die auf dem Träger (7) ausgebildeten passenden Gleitlagerflächen (10) von der Gestalt her jenen (9) an dem Gehäuse (1) entsprechen und unter Verwendung ihrer passenden Gestalten aneinander liegen.

9. Abtastgerät nach Anspruch 1, **dadurch gekennzeichnet, daß** das Federmittel eine Zugfeder (14) ist, die zwischen dem Gehäuse (1) und dem Träger (7) angeordnet und vorgespannt ist und die auf eine integrale an dem Träger (7) ausgebildeten Zunge (13) wirkt.

10. Vorrichtung zum Lesen oder zum Schreiben oder zum Lesen und zum Schreiben auf optische Aufzeichnungsmedien, die ein Abtastgerät nach einem oder mehreren der Ansprüche 1 bis 9 umfaßt.

## Revendications

1. Dispositif de balayage optique destiné à un appareil de lecture ou d'écriture ou de lecture et d'écriture sur des supports d'enregistrement optique, comportant un boîtier optique (1) mobile comportant des surfaces de glissement (9) qui en font partie intégrante pour maintenir un support (7) comportant des surfaces de glissement (10) qui s'ajustent sur les autres surfaces de glissement, peut être réglé autour d'un axe virtuel (A) et comporte une tête de balayage (4), ayant au moins une vis de réglage (8) maintenue sur le boîtier (1), agit sur le support (7), appuie contre le bord d'une ouverture (16) creusée dans le boîtier (1), pénètre dans ladite ouverture avec sa partie filetée (17) vers le support (7) avec du jeu et peut se déplacer dans l'ouverture (16) dans un sens transversal, et ayant au moins un moyen de ressort (14) qui agit sur le support (7) du côté des surfaces de glissement (9) qui est éloigné de la vis de réglage (8) et exerce une tension sur ledit support (7) qu'il appuie contre les surfaces de glissement (9) du boîtier, **caractérisé en ce que** la vis de réglage (8) agit sur le support selon un angle variable et modifie son angle par rapport au support (7) dans le cas d'un mouvement de la vis pour déclencher un mouvement de réglage de la part du support (7).

2. Dispositif de balayage selon la revendication 1, **caractérisé en ce qu'**un trou taraudé (12) comportant un seul tour taraudé (18) de maintien de la vis de réglage (8) est percé dans le support (7).

3. Dispositif de balayage selon la revendication 2, **caractérisé en ce que** le tour taraudé (18) est interrompu et comporte seulement deux segments taraudés (19) disposés l'un en face de l'autre, et **en ce que** la ligne de liaison (20) entre les segments taraudés (19) est sensiblement parallèle à l'axe virtuel (A) du support (7).

4. Dispositif de balayage selon la revendication 2 ou 3, **caractérisé en ce que** le tour taraudé (18) ou les segments taraudés (19) est/sont effectué(s) sur le support (7) sur le côté éloigné du boîtier (1).

5. Dispositif de balayage selon au moins une des revendications 2 à 4, **caractérisé en ce que** le trou (12) qui porte le tour taraudé (18) se trouve sur la languette (11) formée sur le support (7).

6. Dispositif de balayage selon la revendication 5, **caractérisé en ce que** le boîtier (1) se trouve à un niveau inférieur dans la zone de la languette (11).

7. Dispositif de balayage selon la revendication 1, **caractérisé en ce que** les surfaces de glissement (9) se trouvant sur le boîtier (1) sont formées sur des supports (6) qui forment simultanément des surfaces de guidage latéral pour le support (7) de leur côté qui fait face à ce dernier.

8. Dispositif de balayage selon la revendication 1, **caractérisé en ce que** les surfaces de glissement (10) formées sur le support (7) correspondent en forme à celles (9) du boîtier (1) sur lesquelles elles s'ajustent et contre lesquelles elles s'appuient en utilisant leur formes correspondantes.

9. Dispositif de balayage selon la revendication 1, **caractérisé en ce que** le moyen de ressort est un ressort de tension (14) qui est placé et prétendu entre le boîtier (1) et le support (7) et qui agit sur une languette (13) qui fait partie intégrante du support (7).

10. Appareil de lecture ou d'écriture ou de lecture et d'écriture sur des supports d'enregistrement optique qui comporte un dispositif de balayage conforme à au moins une des revendications 1 à 9.
